# EUROPÄISCHE PATENTANMELDUNG

(11) **EP 0 875 325 A1**
(43) Veröffentlichungstag der Anmeldung: **04.11.1998**
(21) Anmeldenummer: 98107481.8
(22) Anmeldetag: 24.04.1998
(51) Int. Cl.: B23D 57/00, B28D 5/04

(54) **Drahtsäge, Montage-, Wartungs- und Einfahrstation für eine Drahtführungsrollen-Einheit der Drahtsäge und Verfahren zum Auswechseln der Drahtführungs-rollen-Einheit**

(30) Priorität: 24.04.1997 DE 19717379
(71) Anmelder: Wacker Siltronic Gesellschaft für Halbleitermaterialien Aktiengesellschaft, 84489 Burghausen (DE)
(72) Erfinder: Egglhuber, Karl, 84332 Hebertsfelden (DE)

(57) **Zusammenfassung**

Gegenstand der Erfindung ist eine Drahtsäge zum Abtrennen von Scheiben von einem Werkstück, mit einem Sägekopf (4), in dem mindestens zwei Drahtführungsrollen (1) jeweils zwischen einem Lostager (2) und einem Festlager (3) drehbar gelagert sind, wobei benachbarte Drahtführungsrollen (1) zusammen mit einem um sie gewickelten Draht ein Drahtgatter ausbilden. Jede Drahtführungsrolle (1) und das ihr zugeordnete Lostager (2) und Festlager (3) bilden eine Drahtführungsrollen-Einheit (6), die nur als Ganzes aus dem Sägekopf (4) entfernt werden kann. Die Erfindung betrifft ferner eine Montagestation und eine Wartungs- und Einfahrstation für die Drahtführungsrollen-Einheit und ein Verfahren zum Auswechseln der Drahtführungsrollen-Einheit.

## Beschreibung

Gegenstand der Erfindung ist eine Drahtsäge zum Abtrennen von Scheiben von einem Werkstück, insbesondere eine Drahtsäge zur Herstellung von Halbleiterscheiben. Die Drahtsäge umfaßt einen Sägekopf, in dem mindestens zwei Drahtführungsrollen jeweils zwischen einem Los- und einem Festlager drehbar gelagert sind, wobei benachbarte Drahtführungsrollen zusammen mit einem um sie gewickelten Draht ein Drahtgatter ausbilden. In Verbindung mit einer Sägesuspension wirkt das Drahtgatter als Schneidwerkzeug. Auf eine Sägesuspension kann verzichtet werden, wenn ein Sägedraht mit gebundenem Schneidkorn verwendet wird. Die Erfindung betrifft ferner eine Montagestation und eine Wartungs- und Einfahrstation für eine Drahtführungsrollen-Einheit und ein Verfahren zum Auswechseln der Drahtführungsrollen-Einheit.

Eine Drahtsäge der genannten Gattung mit einem Sägekopf, in dem die Drahtführungsrollen jeweils zwischen einem Los- und einem Festlager in einem Sägekopf gelagert sind, ist beispielsweise in der EP-733 429 A1 beschrieben. Mit dieser Drahtsäge kann eine Vielzahl von Halbleiterscheiben einer bestimmten Dicke während eines Trennvorganges von einem Kristallstück abgetrennt werden. Die Dicke der Halbleiterscheiben ist durch den Abstand bestimmt, den die Windungen des Sägedrahtes im Drahtgatter haben. Dieser Abstand ist wiederum durch Rillen im Belag der Drahtführungsrollen, in denen der Draht läuft, im wesentlichen vorgegeben. Die Drahtsäge verfügt außerdem über ein Heiz-/Kühlsystem zum Temperieren der Drahtführungsrollen und der ihnen zugeordneten Los- und Festlager. Unerwünschte Sägedraht-Verlagerungen infolge von Wärmedehnung von Maschinenteilen sollen auf diese Weise möglichst klein gehalten werden.

Ein Wechsel des Belags einer Drahtführungsrolle oder ein Drahtführungsrollen-Wechsel wird insbesondere notwendig, wenn sich das Trennergebnis verschlechtert, weil der Belag verschlissen ist, oder, wenn beabsichtigt ist, die Dicke nachfolgend abzutrennender Scheiben auf einen neuen Wert zu ändern. Eine Verschlechterung des Trennergebnisses kann auch auf beschädigte Lager hinweisen.

Wenn der Belag oder die Lager gewechselt werden, müssen die Drahtführungsrolle oder die Lager aus dem Sägekopf ausgebaut werden. Dies ist bisher aufwendig und führt zu langen Stillstandszeiten der Drahtsäge. Nach dem Einsetzen einer neuen Drahtführungsrolle oder neuer oder reparierter Lager muß die Drahtsäge dann noch eine gewisse Zelt eingefahren und auf Betriebstemperatur gebracht werden, ehe ein stabiler Betrieb möglich ist. In der Regel muß dann erst ein Testwerkstück gesägt werden, bevor mit der eigentlichen Produktion von Scheiben fortgefahren werden kann.

Die vorliegende Erfindung löst die Aufgabe, die mit einem Drahtführungsrollen- oder Lagerwechsel verbundene Stillstandszeit der Drahtsäge zu verkürzen und einen Belagwechsel zu vereinfachen.

Gegenstand der Erfindung ist eine Drahtsäge der genannten Gattung, die dadurch gekennzeichnet ist, daß jede Drahtführungsrolle und das ihr zugeordnete Los- und Festlager eine Drahtführungsrollen-Einheit bilden, die nur als Ganzes aus dem Sägekopf entfernt werden kann.

Auch die Drahtführungsrolle und die Lagerwellen bilden eine starre Einheit, die als solche ausgewuchtet wird und deren Lagersitze und Belagaufnahme in einem Arbeitsgang gefertigt werden können.

Bei den bekannten Konstruktionen, bei denen zum Ausbau der Drahtführungsrollen die Lagerwellen von den Drahtführungsrollen aufgetrennt werden müssen, fließt das Kühlmittel, das sich in den Lagerwellen und der Drahtführungsrolle befindet (sofern eine Innenkühlung vorhanden ist), in den Sägeraum und verändert die Zusammensetzung der Sägesuspension, so daß diese sogar unbrauchbar werden kann. Bei der vorgeschlagenen Konstruktion kann dies nicht passieren, da Drahtführungsrolle und Lagerwellen als Einheit demontiert werden.

Das Zusammenfassen von Drahtführungsrolle und Los- und Festlager zu einer Drahtführungsrollen-Einheit ermöglicht nicht nur einen zügigen Ausbau der Drahtführungsrolle und der Lager, sondern erschließt auch die Möglichkeit, die ausgebaute Drahtführungsrolle in einer Montagestation mit einem neuen Belag zu versehen, wobei im Anschluß daran und dem Wiedereinbau der Drahtführungsrollen-Einheit in die Drahtsäge ein Einfahren der Drahtsäge zum Erreichen der notwendigen Betriebstemperatur entfallen kann.

Bei den Drahtführungsrollen-Lagerkonstruktionen bekannter Art sind die Drahtführungsrollen zwischen Festlagerwelle und Loslagerwelle derart verschraubt, daß die Antriebskräfte übertragen werden, jedoch aber keine starre Einheit von Lagerwellen und Drahtführungsrolle in Form eines einteiligen Stücks besteht. Deshalb sind die Festlager- und Loslagerwellen jeweils mit 2 Lagerpaketen zur Stabilisierung gelagert.

Die 3-teilige miteinander verschraubte Anordnung der Lagerwellen und der Drahtführungsrolle ist aufwendig und führt zu Fluchtungsfehlern und damit zu Spannungen im Wellensystem, was wiederum zu einer Verkürzung der Lagerlebensdauer und zu unkontrollierten Erwärmungen der Lager führt. Außerdem wird durch den sich aus Fluchtungsfehlern ergebenden unruhigen Lauf die Geometrie der abzutrennenden Scheiben beeinflußt.

Die vorliegende Erfindung löst daher auch die Aufgabe, Fluchtungsfehler zu vermeiden, die Lagerkonstruktion zu vereinfachen und einen ruhigen Lauf zu gewährleisten.

Gegenstand der Erfindung ist auch eine Montagestation für eine Drahtführungsrollen-Einheit mit einer Drahtführungsrolle, einem Los- und einem Festlager, umfassend
a) Stützflächen zum Abstützen der Drahtführungsrollen-Einheit;
b) Halteelemente zum Fixieren der Drahtführungsrollen-Einheit auf den Stützflächen;
c) ein Heiz-/Kühlsystem zum Temperieren der Drahtführungsrollen-Einheit, und
d) Mittel zum Lösen eines Belages von der Drahtführungsrolle.

Die Stillstandszeit der Drahtsäge ist erheblich verkürzt, wenn die Drahtführungsrollen-Einheit, die der Drahtsäge entnommen wurde, durch eine andere, in einer Montagestation bereits auf ihren Einsatz vorbereitete Drahtführungsrollen-Einheit ersetzt wird.

Die Lager der aus der Drahtsäge entfernten Drahtführungsrollen-Einheit können auch außerhalb der Drahtsäge repariert oder ausgewechselt werden. Es wird vorgeschlagen, die Drahtführungsrollen-Einheit im Anschluß an eine Reparatur oder einen Wechsel der Lager in einer Wartungs- und Einfahrstation einzufahren. Währenddessen kann die Drahtsäge mit einer, beispielsweise in einer weiteren Wartungs- und Einfahrstation vorbereiteten und eingefahrenen Drahtführungsrollen-Einheit, zur Produktion von Scheiben eingesetzt werden. Die Stillstandszeit der Drahtsäge verkürzt sich durch den Wegfall einer Einfahrphase in der Drahtsäge und dem Sägen eines Testwerkstücks auf die Dauer des Austausches von Drahtführungsrollen-Einheiten.

Gegenstand der Erfindung ist daher auch eine Wartungs- und Einfahrstation für eine Drahtführungsrollen-Einheit mit einer Drahtführungsrolle, einem Los- und einem Festlager, umfassend
a) Lagerstützen für die Lager der Drahtführungsrollen-Einheit;
b) ein Heiz-/Kühlsystem zum Temperieren der Drahtführungsrollen-Einheit;
c) einen Antrieb zum Einfahren der Drahtführungsrollen-Einheit; und
d) eine Einrichtung zur Überwachung des Einfahrens der Drahtführungsrollen-Einheit.

Gegenstand der Erfindung ist schließlich ein Verfahren zum Auswechseln einer Drahtführungsrollen-Einheit einer Drahtsäge zum Abtrennen von Scheiben von einem Werkstück. Das Verfahren ist dadurch gekennzeichnet, daß die Drahtführungsrollen-Einheit, die eine mit einem Belag versehene Drahtführungsrolle und ein Los- und ein Festlager umfaßt, aus einer Arbeitsposition in eine Freigabeposition axial verschoben wird und mit Hilfe eines Manipulators aus der Drahtsäge entfernt wird und eine vortemperierte Drahtführungsrollen-Einheit in die Arbeitsposition gebracht wird.

Die Erfindung wird nachfolgend an Hand von Figuren näher erläutert. Die Figuren sind Schnittdarstellungen bevorzugter Ausführungsbeispiele einer Drahtsäge mit einer Drahtführungsrollen-Einheit, einer Montagestation und einer Wartungs- und Einfahrstation. Es sind nur solche Merkmale dargestellt, die zum Verständnis der Erfindung beitragen.
Figur 1 zeigt eine in einem Sägekopf einer Drahtsäge eingebaute Drahtführungsrollen-Einheit;
Figur 2 zeigt die Drahtführungsrollen-Einheit gemäß Figur 1 in einer Freigabeposition, in der sie aus dem Sägekopf gehoben werden kann;
Figur 3 zeigt die Drahtführungsrollen-Einheit gemäß Figur 2 in einer erfindungsgemäßen Montagestation.
Figur 4 zeigt die Drahtführungsrollen-Einheit gemäß Figur 2 in einer für eine Reparatur oder einen Wechsel der Lager geeigneten Anordnung.
Figur 5 zeigt die Drahtführungsrollen-Einheit gemäß Figur 2 in einer erfindungsgemäßen Wartungs- und Einfahrstation.

Soweit in den Figuren dieselben Bezugszahlen verwendet sind, bezeichnen diese gleichartige Merkmale.

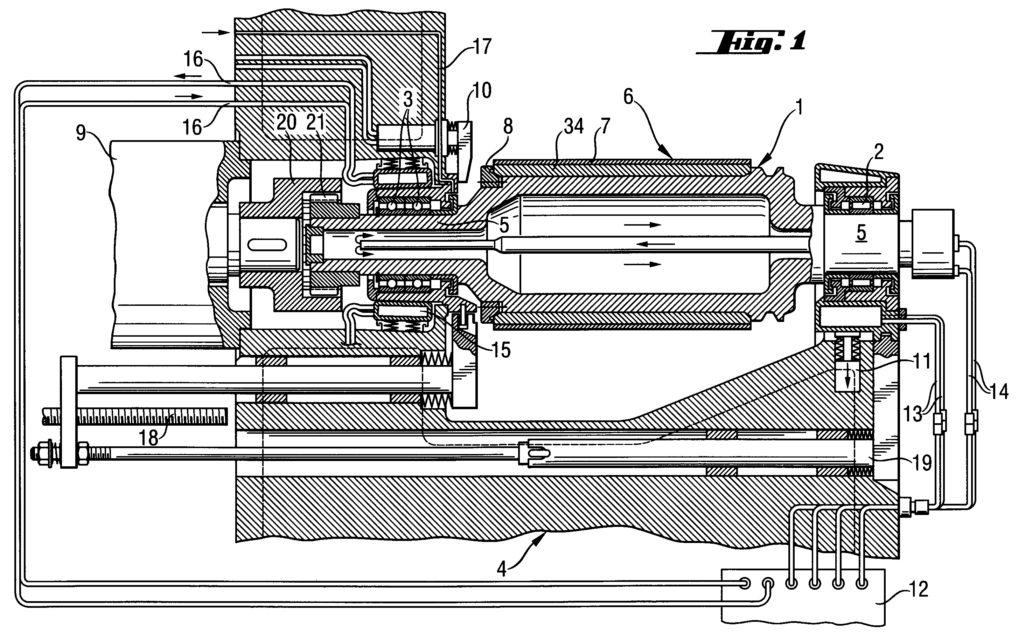

Zunächst wird auf Figur 1 Bezug genommen. Die Drahtführungsrolle 1 ist zwischen einem Loslager 2 und einem Festlager 3 in einem Sägekopf 4 drehbar gelagert. Im Sägekopf sind vorzugsweise 2 bis 4 Drahtführungsrollen untergebracht, von denen mindestens eine angetrieben wird. Der zylindrische Körper der Drahtführungsrolle ist an den Seiten zu einer Lagerwelle 5 verjüngt. Das Loslager 2 und das Festlager 3 sitzen auf der Lagerwelle und bilden mit der Drahtführungsrolle 1 eine Drahtführungsrollen-Einheit 6. Auf der Drahtführungsrolle befindet sich ein einteiliger Belag 7 mit Führungsrillen (nicht dargestellt), der durch einen lösbaren Ring 8 zentriert und gegen axiales Verschieben gesichert ist. Die dargestellte Drahtführungsrolle wird von einem Motor 9, dessen Drehmoment über eine Kupplung direkt übertragen wird, angetrieben. Im Zusammenhang mit der Erfindung ist allerdings unerheblich, daß die Drahtführungsrolle über einen eigenen Antrieb verfügt. Gegen eine unerwünschte axiale Verschiebung der Drahtführungsrollen-Einheit sind Schwenkspanner 10 und zur Fixierung des Loslagers 2 Klemmelemente 11 vorgesehen. Sie fixieren die Drahtführungsrollen-Einheit im Sägekopf in einer Arbeitsposition. Die Schwenkspanner 10 und die Klemmelemente 11 werden vorzugsweise hydraulisch bewegt.

Das Temperieren der Drahtführungsrollen-Einheit erfolgt mit Hife eines Heiz-/Kühlystems 12. Dieses umfaßt Versorgungsleitungen 13 und 14, die mit Kanälen im Inneren der Drahtführungsrolle und des Loslagers verbunden sind, und durch die ein Temperiermittel-Kreislauf in der Drahtführungsrolle und im Loslager aufrechterhalten wird. Weiterhin umfaßt das Heiz-/Kühlsystem Temperiersegmente 15 mit entsprechenden Versorgungsleitungen 16 zum Temperieren des Festlagers von außen. Sie liegen an der leicht konisch ausgebildeten Mantelfläche des Festlagers an und werden durch Federn gegen die Mantelfläche gedrückt. Mit Hilfe einer Dichtluftleitung 17 kann ein stetiger Luftstrom in den Bereich des Festlagers geführt und auf diese Weise verhindert werden, daß Bestandteile der Sägesuspension oder des beim Trennvorgang erzeugten Abriebs in das Festlager eindringen können.

Zum Entfernen der Drahtführungsrollen-Einheit aus der Drahtsäge ist eine Ausbauhilfe vorgesehen. Im dargestellten Ausführungsbeispiel umfaßt diese ein mit einem Spindelantrieb 18 versehenenes Linearschlittensystem 19, mit dem die Drahtführungsrollen-Einheit 6 in eine Freigabeposition axial verschoben werden kann. Zuvor muß der Sägedraht entfernt und die Arretierung durch die Schwenkspanner 10 und Klemmelemente 11 aufgehoben werden. Darüber hinaus müssen die Versorgungsleitungen 13 und 14 von der Drahtführungsrollen-Einheit getrennt werden, wobei an den Trennstellen selbstständig schließende Ventile vorgesehen sind.

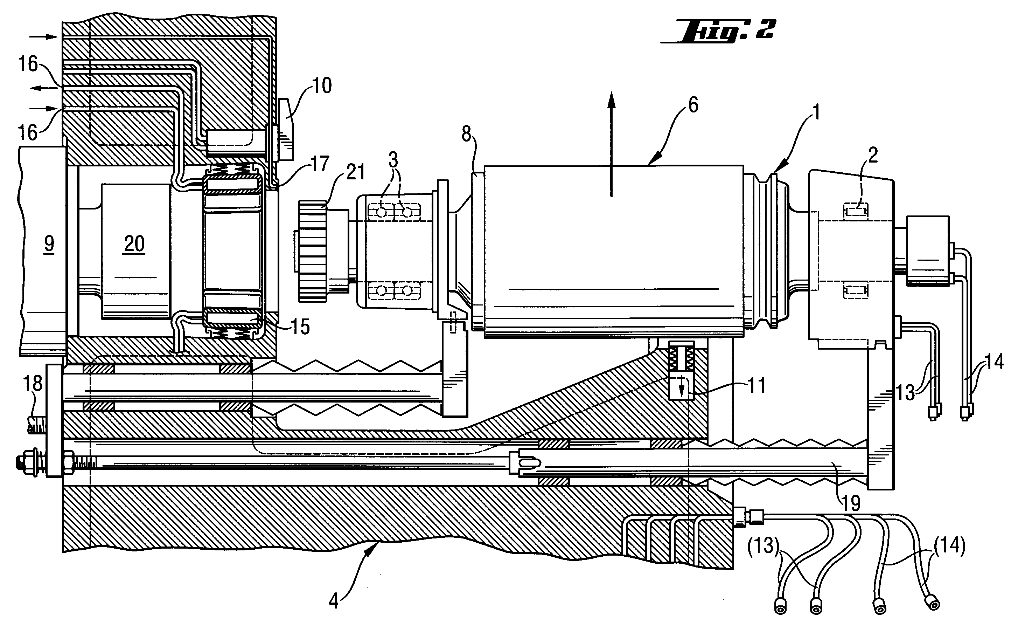

In Figur 2 ist eine Situation dargestellt, in der sich die Drahtführungsrollen-Einheit bereits in der Freigabeposition befindet. Die gezeigte Ausführungsform der Drahtsäge weist eine Kupplung zwischen dem Antrieb und dem Festlager auf, die beim Verschieben der Drahtführungsrollen-Einheit in die Freigabeposition in eine im Sägekopf bleibende Hälfte 20 und eine mit der Drahtführungsrollen-Einheit 6 in Verbindung bleibende Hälfte 21 selbsttätig getrennt wird. Ebenso wird im Verlauf des Verschiebens der Drahtführungsrollen-Einheit die Dichtluftleitung 17 automatisch getrennt. In der Freigabeposition kann die Drahtführungsrollen-Einheit mit Hilfe eines Manipulators in Pfeilrichtung aus dem Sägekopf gehoben und beispielsweise in eine Montagestation überführt werden. Zur Vermeidung langer Stillstandszeiten der Drahtsäge wird, vorzugsweise gleich im Anschluß an das Entfernen der Drahtführungsrollen-Einheit, eine bereits für ihren Einsatz vorbereitete andere Drahtführungsrollen-Einheit in einer, der Entnahme entsprechend umgekehrten Reihenfolge, in die Arbeitsposition gebracht. Natürlich soll auch nicht ausgeschlossen sein, daß die entnommene Drahtführungsrollen-Einheit überholt wird, beispielsweise gereinigt und mit einem neuen Belag versehen wird und anschließend an ihren ursprünglichen Platz im Sägekopf zurückgebracht wird. Beim Einbau der Drahtführungsrollen-Einheit kontaktieren die Temperiersegmente 15 automatisch an der Mantelfläche des Festlagers 3 (Fig. 1). Es müssen keine Versorgungsleitungen angeschlossen werden.

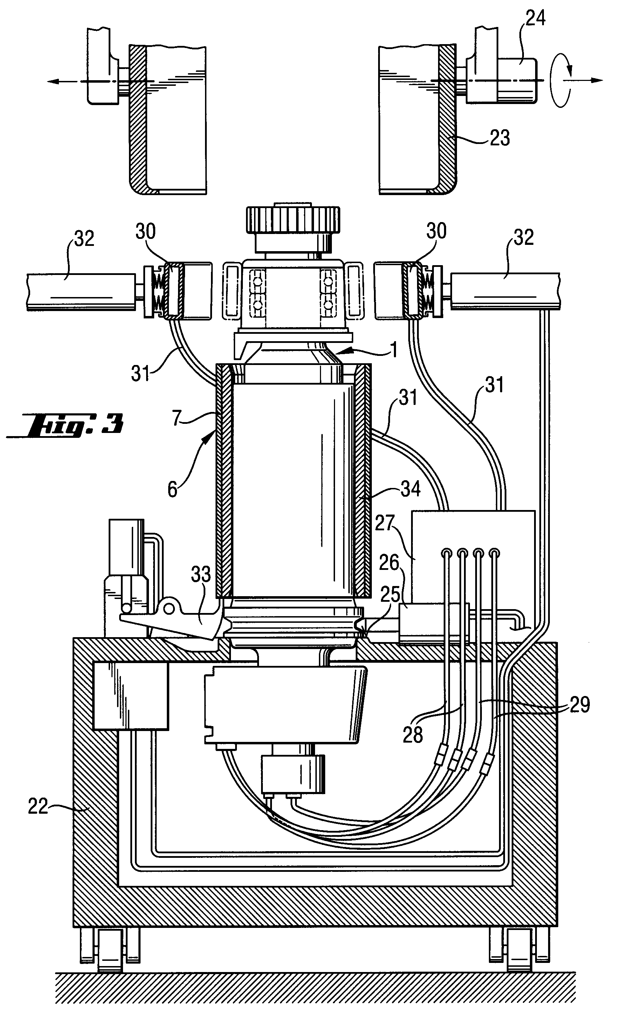

Ein Wechsel des Belages der Drahtführungsrolle wird in einer dafür vorgesehenen Montagestation vorgenommen. In Figur 3 ist eine Montagestation 22 mit einer darin untergebrachten Drahtführungsrollen-Einheit 6 und einem Teil eines zum Bewegen der Drahtführungsrollen-Einheit geeigneten Manipulators dargestellt. Zweckmäßigerweise besitzt der Manipulator zangenartige Greifer 23, die die Drahtführungsrollen-Einheit seitlich umschließen, und eine Drehachse 24, die ein Drehen der Drahtführungsrollen-Einheit um 90° ermöglicht. Die dem Sägekopf entnommene Drahtführungsrollen-Einheit wird um den genannten Winkel gedreht und auf Stützflächen 25 der Montagestation abgestellt oder gegebenenfalls eingehängt und mit Halteelementen 26 darauf fixiert. Die Montagestation 22 ist mit einem Heiz-/Kühlsystem 27 zum Temperieren der Drahtführungsrollen-Einheit 6 ausgestattet. Dieses umfaßt Versorgungsleitungen 29, die mit Kanälen im Inneren der Drahtführungsrolle und des Loslagers und des Festlagers verbunden sind, und durch die ein Temperiermittel-Kreislauf in der Drahtführungsrolle und im Los- und im Festlager aufrechterhalten wird. Darüber hinaus wird das Loslager über die Versorgungsleitungen 28 von außen temperiert. Zum Temperieren des Festlagers von außen sind Temperiersegmente 30 mit entsprechenden Versorgungsleitungen 31 vorgesehen, die mit Linear-Zustellelementen 32 an das Festlager heranbewegt werden können. Zur Erleichterung eines Belagwechsels ist in der Montagestation ein Werkzeug 33 vorgesehen, mit dem der Belag 7, der im dargestellten Ausführungsbeispiel auf eine einteilige Hülse 34 aufgegossen ist, von der Drahtführungsrolle gelöst werden kann. Die Hülse 34 ist vorzugsweise aus einem CFK-Material gefertigt (CFK = mit Kohlefasern verstärkter Kunststoff). Sie sitzt auf einer Belagaufnahme der Drahtführungsrolle. Die Drahtführungsrollen-Einheit kann auch vollständig aus CFK-Material bestehen.
Mit Hilfe des Heiz-/Kühlsystems wird die Drahtführungsrollen-Einheit während ihres Aufenthalts in der Montagestation vortemperiert, so daß nach einem anschließenden Einbau in die Drahtsäge keine Aufwärmphase notwendig ist, während der die Drahtführungsrolle auf Betriebstemperatur gebracht werden muß. Zur Wiederherstellung der Betriebsbereitschaft der Drahtsäge genügt es, die Drahtführungsrollen-Einheit dem umgekehrten Ablauf ihrer Entnahme entsprechend in die Arbeitsposition im Sägekopf zu bringen und die Drahtführungsrollen mit einem neuen Sägedraht zu belegen.
Die Montagestation kann als verfahrbarer Montagewagen ausgebildet sein, der bei Bedarf an die Drahtsäge herangefahren wird. Eine andere Ausführungsform sieht vor, die Montagestation und gegebenfalls auch den Manipulator an die Drahtsäge anzubauen. Schließlich kann die Montagestation auch so ausgebildet sein, daß sie mehr als eine Drahtführungsrollen-Einheit aufnehmen kann.

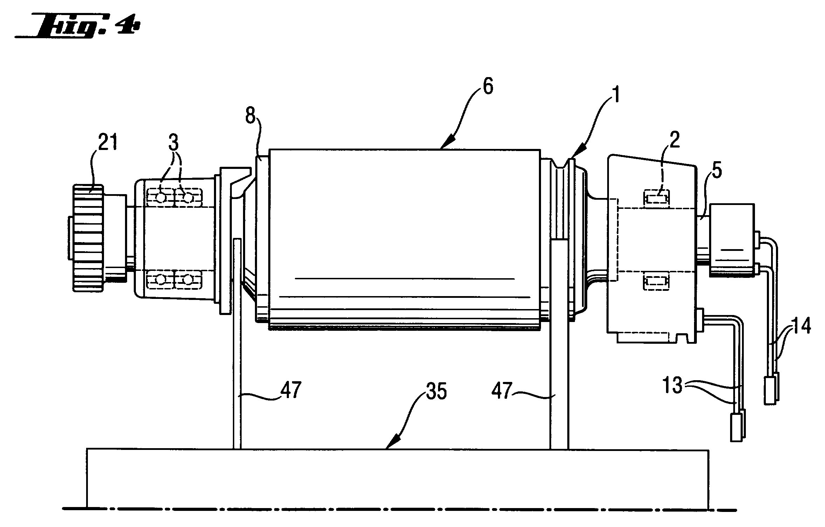

Falls die Lager der Drahtführungsrollen-Einheit repariert oder gewechselt werden müssen, wird die Drahtführungsrollen-Einheit wie bereits beschrieben aus der Drahtsäge oder der Montagestation entfernt und vorzugsweise so angeordnet, daß die Lager frei zugänglich sind. Eine derartige Anordnung ist in Figur 4 gezeigt. Die Drahtführungsrollen-Einheit 6 befindet sich außerhalb der Drahtsäge auf einem Reparaturtisch 35 und wird auf diesem mittels Stützen 47 abgestützt. Nach Beendigung der notwendigen Arbeiten wird die Drahtführungsrollen-Einheit in eine Wartungs- und Einfahrstation überführt.

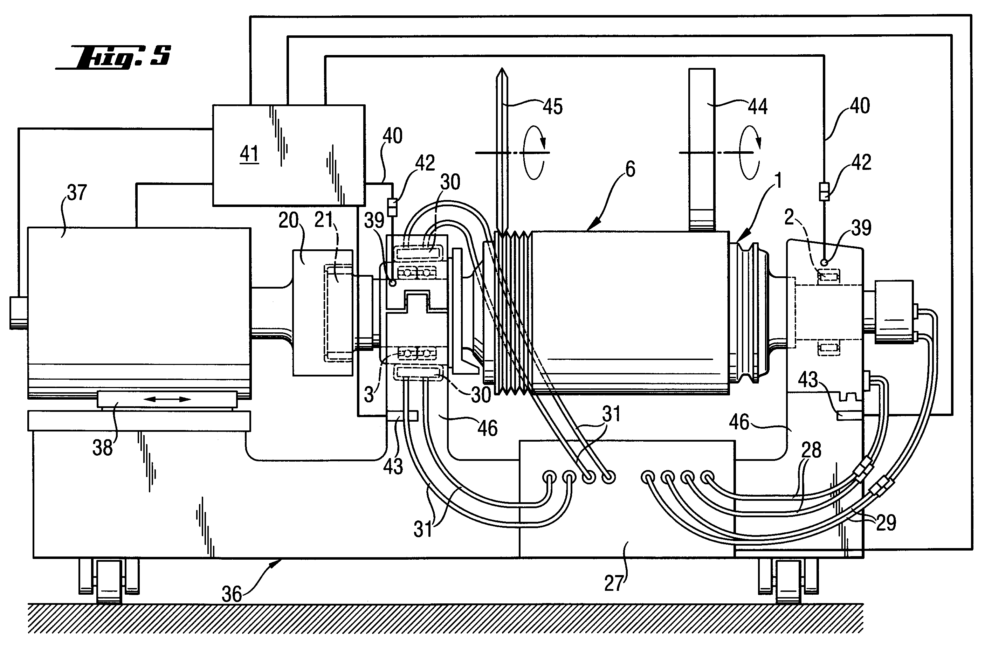

Figur 5 zeigt eine geeignete Wartungs- und Einfahrstation 36, in der die Drahtführungsrollen-Einheit 6 auf Lagerstützen 46 abgelegt ist. In der Station befindet sich ein Motor 37 zum Antreiben der Drahtführungsrollen-Einheit. Der Motor wird durch Verschieben einer Linearführung 38 an die Drahtführungsrollen-Einheit gekuppelt. Die reparierten oder ausgewechselten Lager 2 und 3 werden mit Hilfe des Motors nach einem festgelegten Programm mit bestimmten Drehzahlen angetrieben. Während des Testlaufes werden die Temperaturen an den Lagern und die Schwingungen gemessen, die die drehende Drahtführungsrollen-Einheit verursacht. Der Testlauf, der mehrere Stunden dauern kann, wird mit dem Ziel durchgeführt, die Drahtführungsrollen-Einheit auf ihren Einsatz in der Drahtsäge vorzubereiten. Insbesondere ist dabei die Drahtführungsrollen-Einheit auf eine konstante Betriebstemperatur zu bringen und eine schwingungsarme Drehbewegung der Drahtführungsrollen-Einheit zu erreichen. Der Testlauf wird von einer Einrichtung 41 zur Überwachung des Einfahrens der Drahtführungsrollen-Einheit gesteuert. Die Wartungs- und Einfahrstation 36 ist wie die Montagestation gemäß Fig.3 mit einem Heiz-/Kühlsystem 27 zum Temperieren der Drahtführungsrollen-Einheit 6 ausgestattet. Die Temperaturen des Los- und Festlagers werden von Temperatursensoren 39 gemessen und über Signalleitungen 40 der Überwachungseinrichtung 41 laufend gemeldet. Die Signalleitungen 40 sind über Schnellschlußkupplungen 42 mit den Temperatursensoren verbunden. Nach einem Einbau der Drahtführungsrollen-Einheit in die Drahtsäge können die Temperatursensoren über die Schnellkupplungen auch an eine Drahtsägensteuerung angeschlossen werden.
An die Überwachungseinrichtung 41 sind auch Schwingungssensoren 43 angeschlossen, die die Schwingungsentwicklung beim Lauf der Drahtführungsrollen-Einheit verfolgen. Bei einem Überschreiten von als noch zulässig erachteten Schwingungswerten wird der Testlauf abgebrochen, und die Drahtführungsrollen-Einheit ausgewuchtet.
Gemäß einer bevorzugten Ausführungsform sind in der Wartungs- und Einfahrstation 36 auch Mittel vorgesehen, mit denen ein beschädigter oder verschlissener Belag der Drahtführungsrolle überholt werden kann. Diese Mittel können beispielsweise ein Rundschleifwerkzeug 44 und ein Rillenschleifwerkzeug 45 umfassen. Mit dem Rundschleifwerkzeug wird der Belag überschliffen, und mit dem Rillenschleifwerkzeug werden Führungsrillen in den Belag eingeschliffen. Der Antrieb der Schleifwerkzeuge ist in Fig.5 nicht dargestellt.

Eine in der Wartungs- und Einfahrstation auf ihren Einsatz vorbereitete Drahtführungsrollen-Einheit kann nach dem Einbau in die Drahtsäge und dem Belegen mit Sägedraht unverzüglich für die Produktion von Scheiben eingesetzt werden. Stillstandszeiten der Drahtsäge lassen sich auf die Dauer des Austausches von Drahtführungsrollen-Einheiten reduzieren, indem eine Drahtführungsrollen-Einheit nach ihrer Entnahme aus der Drahtsäge unverzüglich durch eine auf die beschriebene Weise einsatzfähig gemachte Drahtführungsrollen-Einheit ersetzt wird. Einfahrphasen in der Drahtsäge und das Sägen von Testwerkstücken werden auf diese Weise eingespart.

## Patentansprüche

1. Drahtsäge zum Abtrennen von Scheiben von einem Werkstück, mit einem Sägekopf, in dem mindestens zwei Drahtführungsrollen jeweils zwischen einem Los- und einem Festlager drehbar gelagert sind, wobei benachbarte Drahtführungsrollen zusammen mit einem um sie gewickelten Draht ein Drahtgatter ausbilden, dadurch gekennzeichnet, daß jede Drahtführungsrolle und das ihr zugeordnete Los- und Festlager eine Drahtführungsrollen-Einheit bilden, die nur als Ganzes aus dem Sägekopf entfernt werden kann.

2. Drahtsäge nach Anspruch 1, gekennzeichnet durch eine im Sägekopf vorgesehene Ausbauhilfe, mit der die Drahtführungsrollen-Einheit axial verschoben werden kann.

3. Drahtsäge nach Anspruch 1 oder Anspruch 2, gekennzeichnet durch Temperiersegmente zum Temperieren des Festlagers, die beim Entfernen der Drahtführungsrollen-Einheit im Sägekopf bleiben und bei einem Einbau der Drahtführungsrollen-Einheit in den Sägekopf automatisch an einer Mantelfläche des Festlagers kontaktieren.

4. Drahtsäge nach einem der Ansprüche 1 bis 3, dadurch gekennzeichnet, daß die Drahtführungsrolle und deren Lagerwellen eine rotierende Einheit bilden, die beim Ausbau der Drahtführungsrolle aus der Drahtsäge nicht aufgetrennt werden muß.

5. Montagestation für eine Drahtführungsrollen-Einheit mit einer Drahtführungsrolle, einem Los- und einem Festlager, umfassend
a) Stützflächen zum Abstützen der Drahtführungsrollen-Einheit;
b) Halteelemente zum Fixieren der Drahtführungsrollen-Einheit auf den Stützflächen;
c) ein Heiz-/Kühlsystem zum Temperieren der Drahtführungsrollen-Einheit, und
d) Mittel zum Lösen eines Belages von der Drahtführungsrolle.

6. Montagestation nach Anspruch 5, dadurch gekennzeichnet, daß das Heiz-/Kühlsystem Mittel zum Temperieren der Drahtführungsrollen-Einheit von innen und des Los- und des Festlagers von außen besitzt.

7. Wartungs- und Einfahrstation für eine Drahtführungsrollen-Einheit mit einer Drahtführungsrolle, einem Los- und einem Festlager, umfassend
a) Lagerstützen zum Abstützen der Drahtführungsrollen-Einheit;
b) ein Heiz-/Kühlsystem zum Temperieren der Drahtführungsrollen-Einheit;
c) einen Antrieb zum Einfahren der Drahtführungsrollen-Einheit; und
d) eine Einrichtung zur Überwachung des Einfahrens der Drahtführungsrollen-Einheit.

8. Station nach Anspruch 7, dadurch gekennzeichnet, daß die Einrichtung zur Überwachung des Einfahrens der Drahtführungsrollen-Einheit mit Sensoren ausgestattet ist, die die Temperatur der Lager und den Rundlauf und die Schwingungen der Drahtführungsrollen-Einheit messen.

9. Station nach Anspruch 7 oder 8, gekennzeichnet durch eine Einrichtung zum Rund- und Rillenschleifen eines Belages der Drahtführungsrolle.

10. Verfahren zum Auswechseln einer Drahtführungsrollen-Einheit einer Drahtsäge zum Abtrennen von Scheiben von einem Werkstück, dadurch gekennzeichnet, daß die Drahtführungsrollen-Einheit, die eine mit einem Belag versehene Drahtführungsrolle und ein Los- und ein Festlager umfaßt, aus einer Arbeitsposition in eine Freigabeposition axial verschoben wird und mit Hilfe eines Manipulators aus der Drahtsäge entfernt wird und eine vortemperierte Drahtführungsrollen-Einheit in die Arbeitsposition gebracht wird.

11. Verfahren nach Anspruch 10, dadurch gekennzeichnet, daß die aus der Drahtsäge entfernte Drahtführungsrollen-Einheit in einer Montagestation mit einem neuen Belag versehen und vortemperiert wird.

12. Verfahren nach Anspruch 10, dadurch gekennzeichnet, daß die Lager der aus der Drahtsäge entfernten Drahtführungsrollen- Einheit repariert oder ausgetauscht werden, und die Drahtführungsrollen-Einheit in eine Wartungs- und Einfahrstation überführt wird, in der sie gegebenenfalls ausgewuchtet und auf Rundlauf geprüft, eingefahren und vortemperiert wird.

13. Verfahren nach Anspruch 12, dadurch gekennzeichnet, daß der Belag der Drahtführungsrolle in der Wartungs- und Einfahrstation überholt wird.

14. Drahtsäge nach einem der Ansprüche 1 bis 3, gekennzeichnet durch eine von einer Drahtführungsrolle lösbaren Hülse aus mit Kohlefasern verstärktem Kunststoff.

15. Drahtsäge nach einem der Ansprüche 1 bis 3, gekennzeichnet durch eine Drahtführungsrollen-Einheit aus mit Kohlefasern verstärktem Kunststoff.
